(19) 

**Europäisches Patentamt**
**European Patent Office**
**Office européen des brevets**

(11) **EP 2 477 148 A1**

(12) **DEMANDE DE BREVET EUROPEEN**

(43) Date de publication:
**18.07.2012 Bulletin 2012/29**

(51) Int Cl.:
**G06Q 30/02** *(2012.01)*

(21) Numéro de dépôt: **12150678.6**

(22) Date de dépôt: **10.01.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.01.2011 FR 1100105**

(71) Demandeur: **Alcatel Lucent**
**75007 Paris (FR)**

(72) Inventeurs:
- **Ghorbel, Mahmoud**
**91620 Nozay (FR)**
- **Kamga, Guy-Bertrand**
**91620 Nozay (FR)**
- **Dupont, Marie-Pascale**
**91620 Nozay (FR)**

(74) Mandataire: **Mouney, Jérôme et al**
**Alcatel-Lucent International**
**32, avenue Kléber**
**92700 Colombes (FR)**

(54) **Procédé et système de protection des données privées**

(57) Procédé de protection de données privées destinées à être divulguées par un utilisateur (**4**) à un tiers interconnectés par un réseau, comprenant les opérations suivantes :
- Analyser le contexte de la divulgation ;
- Déterminer des préférences utilisateur concernées par le contexte de la divulgation ;
- Générer une politique (**4**) de confidentialité à appliquer à la divulgation, en fonction du contexte et des préférences utilisateur.

**FIG 1**

EP 2 477 148 A1

**Description**

L'invention concerne la protection de la vie privée (*privacy*) dans un réseau, et plus précisément la protection des données privées, par exemple le domicile, l'état de santé, l'âge, la vie sentimentale, les opinions et croyances, la correspondance, les enregistrements audio, photographiques et vidéo des personnes.

De nombreuses utilisations des réseaux impliquent des risques de diffusion incontrôlée de ces données privées, présumées confidentielles.

Aujourd'hui, le recours croissant des internautes aux outils e travail collaboratif et aux réseaux sociaux en ligne, associé aux moyens de stockage de données de capacité exponentielle dont disposent les professionnels du traitement des données, le traitement et l'échange de données privées (notamment les données personnelles) est en pleine explosion.

Grâce à ces données, certains fournisseurs de services recourent au profilage des utilisateurs qui leur permet de personnaliser les services délivrés : publicité, données de localisation, catalogue de produits et services par exemple. Une telle utilisation commerciale des données privées constitue certes une nuisance mais la diffusion de données confidentielles peut représenter une menace plus grave pour les personnes concernées. Citons à titre d'exemple la communication à un employeur de données confidentielles relatives à la santé de l'un de ses employés, obtenues par collecte automatique sur l'ordinateur de ce dernier.

La collecte des données est conventionnellement une extraction de données dans une banque de données d'utilisateurs. Pour l'internaute le protocole TCP/IP classiquement employé pour la navigation en ligne implique de fournir une adresse IP. Côté serveur, il est possible de manière automatisée de récupérer les données suivantes concernant l'utilisateur et/ou son système : logiciel de navigation (avec sa version), date et heure de la connexion, page sur laquelle est mise en oeuvre un hyperlien invisible, etc. Parmi les outils collecte automatique, citons les *cookies*, bien connus des internautes.

La gestion de la confidentialité est un service qui se révélera bientôt indispensable, pour garantir aux utilisateurs plus de contrôle sur l'utilisation qui peut être faite de leurs données privées.

La gestion et le contrôle de la confidentialité s'intègre dans le cadre plus général de la gestion et du contrôle automatisés des flux d'information, fondés sur l'application de politiques. Ce type de gestion est désigné par PBM (Policy-Based Management).

Ordinairement, côté utilisateur, on fournit à celui-ci des moyens pour régler ses préférences quant à la confidentialité concernant ses données privées. Mais les paramètres à régler sont en nombre croissant et de complexité croissante, et nombre d'utilisateurs ont des connaissances limitées, d'une part quant aux risques qu'ils encourent à ne pas s'intéresser à la question de la confidentialité, d'autre part et surtout quant à la gestion des politiques de confidentialité. C'est pourquoi dans leur majorité les utilisateurs se contentent des réglages par défaut de leur système informatique, ou acceptent sans sourciller les politiques proposées par le système, ce qui peut conduire à des usages non souhaités (par exemple le profilage) ou à des fuites de données privées.

C'est pourquoi le besoin existe d'un système qui puisse assister les utilisateurs dans la spécification de politiques de confidentialité à appliquer lors de la communication de données privées à un tiers (tel qu'une application ou un autre utilisateur).

Certaines solutions (cf. http://www.professionalprivacypolicy.com et http://www.freeprivacypolicy.com) sont d'ores et déjà disponibles en ligne pour aider les professionnels du Web à générer les politiques de confidentialité de leurs sites Web. En pratique, ces solutions se bornent à produire un document statique qui résume la pratique du site concernant la collecte, le stockage et l'utilisation des données privées. En outre, ces solutions ne sont pas orientées utilisateur.

On connaît par ailleurs de la demande de brevet US 2010/0076777 une méthode pour avertir automatiquement les utilisateurs des risques qu'ils encourent quant à la confidentialité de leurs informations privées. Mais la solution proposée se concentre sur les données de géolocalisation de l'utilisateur. De plus, les politiques recommandées à l'utilisateur se limitent à celles déjà activées par d'autres utilisateurs connectés à l'utilisateur concerné par l'intermédiaire d'un réseau social. Or les utilisateurs n'ont pas tous les mêmes exigences quant au respect de la confidentialité.

On connaît également, de la demande de brevet US 2008/0294480, une méthode pour créer une politique de confidentialité et vérifier ensuite l'application de cette politique. Une règle est édictée à partir de d'éléments collectés. Dans cette méthode, les politiques de confidentialité sont seulement associées à des tâches dans un outil de gestion de flux (workflow).

Un objet de l'invention est de faciliter la génération automatique de politiques de confidentialité concernant des données privées destinées à être divulguées à une tierce partie sous certaines conditions, afin d'en préserver la confidentialité. Les données privées dont il est question peuvent comprendre des données personnelles simples (numéro de sécurité sociale, nom, adresse, téléphone, etc.), ou de données composites, plus structurées (documents personnels, rapports professionnels, photographies, messages, etc.).

Un autre objet de l'invention est de simplifier l'accès des utilisateurs aux politiques de confidentialité.

Un autre objet de l'invention est de faciliter l'application des politiques de confidentialité.

Un autre objet est d'améliorer la qualité des politiques de confidentialité.

A cet effet, il est proposé, selon un premier aspect, un procédé de protection de données privées destinées à être divulguées par un utilisateur à un tiers interconnectés par un réseau, qui comprend les opérations suivantes :

- analyser le contexte de la divulgation ;
- déterminer des préférences utilisateur concernées par le contexte de la divulgation ;
- générer une politique de confidentialité à appliquer à la divulgation, en fonction du contexte et des préférences utilisateur.

L'avantage de cette solution est qu'elle n'est pas limitée à l'environnement Web et est plutôt dédiée à l'utilisateur final ou son représentant pour générer la politique de confidentialité appropriée, gouvernant la divulgation de données personnelles ou sensibles, tenant notamment compte du contexte de la divulgation et des préférences utilisateur quant à la confidentialité.

Selon un mode préféré de réalisation, il est en outre prévu une opération de calcul d'une similarité entre les données privées à divulguer et des données historiques mémorisées, cette similarité étant prise en compte pour générer la politique de confidentialité relative aux données privées à divulguer.

Il peut également être prévu une opération de calcul d'une similarité entre le contexte de la divulgation et des contextes historiques mémorisés correspondant aux données historiques mémorisées, cette similarité étant alors prise en compte pour générer la politique de confidentialité relative aux données privées à divulguer.

Ce calcul de similarité peut comprendre une opération d'identification de politiques historiques mémorisées appliquées pour la divulgation desdites données historiques, ces politiques historiques étant alors prises en compte pour générer la politique de confidentialité relative aux données privées à divulguer.

Il peut par ailleurs être prévu une opération d'identification de politiques extérieures de confidentialité de tiers visés par la divulgation, ces politiques extérieures de confidentialité étant alors prises en compte pour générer la politique de confidentialité relatives aux données privées à divulguer.

Il peut en outre être prévu une opération supplémentaire de prise en compte d'informations fournies par l'utilisateur pour résoudre des conflits au sein de la politique de confidentialité générée.

Il est également proposé, selon un deuxième aspect, un produit programme d'ordinateur implémenté sur un support mémoire, susceptible d'être mis en oeuvre au sein d'une unité de traitement informatique et comprenant des instructions pour la mise en oeuvre d'un procédé tel que décrit ci-dessus.

Il est en outre proposé, selon un troisième aspect, un système de protection de données privées destinées à être divulguées par un utilisateur à un tiers, qui comprend :

- Un module d'analyse du contexte de la divulgation ;
- Un module d'analyse de préférences utilisateur concernées par le contexte de la divulgation ;
- Un générateur de politique de confidentialité à appliquer à la divulgation, en fonction du contexte et des préférences utilisateur.

Ce système peut en outre comprendre :

- une base de données dans laquelle sont mémorisées des données privées historiques, et
- un module de calcul d'une similarité entre les données privées à divulguer et lesdites données historiques mémorisées,

Le générateur est dans ce cas programmé pour produire une politique de confidentialité tenant compte de ladite similarité.

La base de données historique contient de préférence des contextes historiques correspondant aux données historiques mémorisées, le module de calcul étant programmé pour calculer une similarité entre le contexte de la divulgation et des contextes historiques mémorisés correspondant aux données historiques mémorisées, et le générateur étant programmé pour tenir compte de cette similarité lors de la production de la politique de confidentialité.

Selon un mode de réalisation, le système comprend en outre un module de vérification de politiques extérieures de confidentialité de tiers visés par la divulgation, le générateur étant alors programmé pour tenir compte desdites politiques extérieures de confidentialité lors de la production de ladite politique de confidentialité.

D'autres objets et avantages de l'invention apparaîtront à la lumière de la description faite ci-après en référence au dessin annexé qui représente schématiquement l'architecture d'un système 1 de protection des données privées d'un utilisateur 2, ainsi que son principe de fonctionnement.

Ce système **1** comprend la combinaison de bases de données et de modules logiciels implémentés sous forme d'instructions de programme d'ordinateur sur un processeur de type CPU d'un ordinateur personnel attribué à un utilisateur, ces modules et bases de données étant destinés à remplir des fonctionnalités au sein d'un système d'exploitation (OS) tel que Windows®, LINUX®, etc.

Le système **1** est alimenté en entrée avec les données **3** privées que l'utilisateur **2** souhaite divulguer à un tiers (en direct à une personne ou un groupe, ou à partager avec des amis, etc.), et qui sont par conséquent destinées à circuler sur un réseau, et que l'on nomme ci-après par convention « données privées circulantes ».

En sortie, le système **1** produit des politiques **4** de confidentialité associées aux données privées circulantes **2**. Ces politiques **4** peuvent notamment être du type sticky (sur les sticky policies, voir Walid Bagga, « Cryptographie à Base de Politiques: Théorie et Applications », Thèse de L'Ecole Nationale Supérieure des Télécommunications, 2006, et Qiang Tang « On Using Encryption Techniques to Enhance Sticky Policies Enforcement », DIES Faculty of EEMCS, 2008).

Le système **1** comprend les éléments fonctionnels interconnectés suivants :

- un analyseur contextuel **5** ;
- une base de données **6** de profils ;
- un analyseur **7** de préférences ;
- un historique **8** ;
- un calculateur **9** de similarité ;
- un vérificateur **10** de politiques externes ;
- un générateur **11** de politiques ;
- éventuellement, un négociateur **12** de politiques.

L'analyseur contextuel **5** est un module logiciel programmé pour analyser le contexte dans lequel l'utilisateur **2** est sur le point de divulguer ses données privées circulantes **3**. Le contexte peut regrouper plusieurs types d'informations, notamment :

- Le type des données privées circulantes **3** : document, photographie, courrier électronique, données d'identité, discussion écrite, etc. ;
- Les propriétés informatiques des données **3** : propriétaire, date de création, dernière date de modification, taille, etc.
- Le ou les tiers (personnes physiques ou entités réseau) éventuellement concernés par la divulgation des données **3**. En effet, les données privées circulantes **3** sont susceptibles d'affecter des personnes ou des entités réseau autres que l'utilisateur **2** lui-même. Cela est vrai surtout lorsque les données privées circulantes **3** concernent ou sont en possession d'un groupe de personnes (tel qu'un parent ou un ami de l'utilisateur 2 qui apparaîtrait sur une photographie, ou encore l'employeur de l'utilisateur - dans ce cas les données privées circulantes **3** peuvent être par exemple contenues dans une documentation ou une correspondance électronique confidentielle). Toutes informations utiles concernant ces tiers pouvant affecter directement la politique **4** de confidentialité, il est préférable de les prendre en compte dans le contexte de la divulgation.
- Le type d'action de divulgation que vont subir les données privées circulantes **3** : envoi par courrier électronique, copie vers un espace de stockage réseau, publication dans un espace public (à accès libre) ou privé (à accès restreint, par exemple protégé par login et mot de passe), communication à un fournisseur d'accès, etc.
- Le type d'environnement réseau dans lequel les données 3 seront divulguées : courrier électronique, site Web public (accessible librement) ou privé (à accès restreint, par exemple protégé par login et mot de passe), blogs, réseaux sociaux, infrastructure réseau d'un fournisseur d'accès, etc.
- Les données disponibles sur l'administrateur ou le responsable de l'environnement réseau : nom du destinataire d'un courrier électronique (et son éventuelle affiliation, par exemple son employeur), propriétaire du site Web, nom et propriétés du réseau social, identité et caractéristiques du fournisseur d'accès, etc.

L'analyseur **5** produit, en sortie, un résultat d'analyse contextuelle - qui peut se présenter sous forme d'un fichier (par exemple de type XML) décrivant le contexte de la divulgation - qui est communiqué à l'analyseur **7** de préférences, au calculateur **9** de similarité et au générateur **11** de politiques (cf. ci-après).

La base de données **6** de profils est une base de données regroupant les données relatives au profil de l'utilisateur **2**, qui comprennent synthétiquement :

- Des informations concernant l'utilisateur **2** lui-même : nom, groupe(s) auquel il adhère (par exemple groupes de discussion), réseaux sociaux auxquels il participe, identité de son employeur, etc.
- Des informations concernant les préférences de confidentialité de l'utilisateur **2**, relatives au caractère confidentiel de certains éléments.

S'agissant des préférences utilisateur, celui-ci peut notamment spécifier le niveau de confidentialité (par exemple faible, moyen, élevé) qu'il souhaite attribuer aux données privées circulantes **3** selon leur type, les personnes ou entités concernées par les données, etc. L'utilisateur **2** peut aussi définir ses propres règles élémentaires de confidentialité qui pourront ensuite être intégrées à la (ou les) politique(s) **4** qui sera (seront) générée(s). Citons à titre d'exemple les règles suivantes : « autorisation de la hiérarchie requise pour tous document relatif à tel projet », « rendre anonyme ou crypter le document envoyé à tel fournisseur de service », etc.

L'analyseur **7** de préférences est un module logiciel relié à l'analyseur **5** contextuel et à la base de données **6** de profils. L'analyseur **7** de préférences est programmé pour déterminer les préférences utilisateur concernées par le contexte de la divulgation des données, tel que déterminé par l'analyseur **5** contextuel.

A cet effet, l'analyseur **7** de préférences reçoit en entrée le résultat d'analyse fourni par l'analyseur **5** contextuel.

L'analyseur **7** de préférences effectue une corrélation entre les éléments du résultat d'analyse de l'analyseur **5** contextuel et les préférences de confidentialité de l'utilisateur **2** contenues dans la base de données **6** de profils, en y cherchant les préférences susceptibles d'être affectées par le contexte de la divulgation décrit dans le résultat d'analyse, notamment :

-   Les préférences utilisateur en fonction du type de données **3**, du destinataire, des personnes/entités affectées,
-   Les restrictions de l'utilisateur **2** en fonction de l'action à mener sur les données **3** (envoi par courriel, publication, etc.)
-   Les règles élémentaires prédéfinies en fonction du propriétaire des données **3**, du contexte de la divulgation, etc.

L'analyseur **7** de préférence effectue ainsi une sélection de préférences, qu'il réunit en y adjoignant un réglage {**préciser SVP**} au sein d'un fichier ou package de préférences (notamment sous forme d'un fichier, par exemple au format XML) qu'il adresse au générateur **11** (cf. ci-après).

L'historique **8** est une base de données contenant des données privées circulantes **3** ayant déjà subi un traitement par le système **1** par le passé (données historiques), ainsi que leurs contextes de divulgation (contextes historiques) et les politiques de confidentialité associées (politiques historiques) générées par le système **1**.

En d'autres termes, l'historique **8** contient les traces des traitements passés, aux fins d'auto-apprentissage du système **1** pour améliorer la qualité des politiques **4** de confidentialité générées et minimiser les sollicitations de l'utilisateur **2**.

Les données stockées dans l'historique **8** se présentent concrètement sous forme d'une série de triplets $\{D_i, C_i, P_{iJ}\}$ dans lequel :

-   $D_l$, représente les données historiques (où i est un nombre entier strictement positif tel que $1 \leq i \leq n$, et où n est un nombre entier strictement positif) ;
-   $C_l$ représente le contexte historique des données $D_l$ ;
-   $P_{ij}$ représente la politique historique ou le groupe de politiques historiques associée(s) à $D_i$ et générées conformément au contexte historique et aux préférences utilisateur (où j est un nombre entier strictement positif tel que $1 \leq j \leq p$, et où p est un nombre entier strictement positif).

Le contenu de l'historique **8** peut être schématisé par le tableau ci-après, dans lequel :
- la colonne de gauche rassemble les données historiques $D_i$ ;
- la colonne centrale rassemble les contextes historiques associés $C_i$ ;
- la colonne de droite rassemble, pour chaque donnée historique $D_i$ et chaque contexte historique associé $C_i$, les politiques historiques générées correspondantes $P_{ij}$.

| Données | Contexte de divulgation des données | Politiques de confidentialité générées |
|---------|-------------------------------------|----------------------------------------|
| $D_1$ | $C_1$ | $P_{11}, P_{12}, ..., P_{1p}$ |
| ... | | |
| $D_l$ | $C_l$ | $P_{i1}, P_{i2}, .... P_{ip}$ |
| ... | | |
| $D_n$ | $C_n$ | $P_{n1}, P_{n2}, ..., P_{np}$ |

Le calculateur **9** de similarité est un module logiciel relié à l'analyseur **5** contextuel et à l'historique **8**. Le calculateur **9** reçoit en entrée :

-   les données privées circulantes **3** actuelles ;
-   le résultat d'analyse de l'analyseur **5** contextuel.

Le calculateur **9** est programmé pour effectuer une analyse comparée :

- des données privées circulantes actuelles **3** et des données historiques $D_i$ afin de sélectionner parmi les données historiques $D_i$ celles qui apparaissent les plus semblables aux données privées circulantes actuelles **3**,
- du contexte actuel et des contextes historiques $C_i$ afin de sélectionner parmi les contextes historiques $D_i$ ceux qui apparaissent le plus semblables au contexte actuel.

S'agissant des données privées circulantes **3**, le calculateur **9** constitue une matrice de similarité de données $Tab_{content}$, qui contient les données $D_g$ (où g est un nombre entier strictement positif tel que $1 \leq g \leq m$, et où m est un nombre entier strictement positif tel que $m \leq n$) qui, parmi l'ensemble des données $D_i$, sont décrétées comme ayant le plus grand pourcentage (par exemple 80% et plus) de similarité de contenu avec les données privées circulantes actuelles **3** :

$$Tab_{Content} = \{D_g \text{ où } 1 \leq g \leq m \text{ et, } m \leq n\}$$

Le calcul de similarité des données peut consister en :

- un appariement sémantique de méta données (ontologie, étiquette, description, etc.),
- une similarité entre mots-clés de chaque donnée,
- ou encore une comparaison stricte du contenu (par exemple une comparaison mot à mot pour les documents textuels, une corrélation d'image pour les documents visuels, etc.).

S'agissant du contexte de divulgation, le calculateur constitue une matrice de similarité de contexte $Tab_{context}$, qui contient les contextes $D_k$ (où k est un nombre entier strictement positif tel que $1 \leq k \leq q$, et où q est un nombre entier strictement positif tel que $q \leq n$) qui, parmi l'ensemble des contextes $C_i$, sont décrétées comme ayant le plus grand pourcentage (par exemple 80% et plus) de similarité de contenu avec le contexte de divulgation actuel :

$$Tab_{Context} = \{C_k \text{ où } 1 \leq k \leq q \text{ et, } q \leq n\}$$

La comparaison entre contextes peut s'effectuer sur :

- le type de données,
- le type d'action à mener sur les données,
- le destinataire,
- l'environnement réseau de la divulgation.

Des deux matrices de similarité $Tab_{Content}$ et $Tab_{Context}$, le calculateur **9** de similarité déduit une troisième matrice $Tab_{ContentContext}$, dite de similarité combinée, résultant de l'intersection des deux matrices de similarité :

$$Tab_{ContentContext} = Tab_{Content} \prod Tab_{Context}.$$

La matrice de similarité combinée $Tab_{ContentContext}$ contient par conséquent les données historiques contenues dans la matrice de similarité des données $Tab_{Content}$, pour lesquelles un contenu historique est présent dans la matrice de similarité des contenus $Tab_{Context}$.

En d'autres termes, la matrice de similarité combinée $Tab_{ContentContext}$ rassemble les données historiques $D_i$ ayant une similarité avec les données actuelles **3** à la fois en termes de contenu et de contexte de divulgation.

La calculateur **9** de similarité produit ainsi, en sortie, un résultat de calcul de similarité - qui peut se présenter sous forme d'un fichier (par exemple de type XML) - contenant les trois matrices $Tab_{ContentContext}$, $Tab_{Content}$ et $Tab_{Context}$ et les politiques historiques $P_{ij}$ associées, que le calculateur **9** communique au générateur **11** de politiques (cf. ci-après).

Les trois matrices $Tab_{Content}$, $Tab_{Context}$ et $Tab_{Contentcontext}$, accompagnées des politiques de confidentialité $P_{ij}$ historiques correspondantes, sont retournées sous forme d'un résultat de similarité (qui peut être sous forme d'un fichier par exemple au format XML) par le calculateur **9** de similarité au générateur **11** de politiques.

Le vérificateur **10** est un module logiciel relié à l'analyseur **5** contextuel et au générateur **11** de politiques, qui reçoit en entrée le résultat d'analyse communiqué par l'analyseur **5** contextuel, et en particulier les données relatives aux tiers (personnes physiques ou entités réseau) susceptibles d'être concernés ou affectées par la divulgation des données privées circulantes **3**, afin de vérifier si des politiques extérieures **13** concernant ces tiers doivent être prises en compte. Ces politiques **13** sont par exemple stockées sur des bases de données extérieures, comme illustré sur le dessin.

A titre d'exemple, dans le milieu professionnel, des données privées circulantes **3** peuvent être propriété de l'employeur de l'utilisateur **2**. L'employeur peut lui-même posséder une politique de confidentialité à appliquer lorsque lesdites données **3** doivent être communiquées de manière conditionnelle. Plus généralement, tout tiers affecté par la communication des données privées circulantes **3** (ou par leur contexte de divulgation) est susceptible d'appliquer certaines politiques de confidentialité, qui peuvent se réduire à de simple restrictions à la divulgation de ces données.

Le vérificateur **10** est programmé pour :

- identifier les tiers (personnes ou entités réseau) affectés par la divulgation des données privées circulantes **3** et/ou par leur contexte de divulgation, et
- vérifier si des politiques **13** de confidentialité extérieures (ou encore des aspects légaux) sont appliquées par lesdits tiers. A cet effet, le vérificateur **10** contacte les tiers (par exemple par l'intermédiaire d'un réseau LAN ou WAN - notamment Internet) et procède à leur interrogation pour identifier les éventuelles politiques **13** de confidentialité extérieures appliquées.

Si ces politiques **13** sont pertinentes vis-à-vis des données privées circulantes **3**, le vérificateur **10** les importe puis les communique au générateur **11** de politiques afin que celui-ci les prenne en considération.

Le générateur **11** de politiques est un module logiciel, relié à l'analyseur **5** contextuel, à l'analyseur **7** de préférences, au calculateur **9** de similarité et au vérificateur **10** de polices extérieures, programmé pour produire (c'est-à-dire générer) des politiques **4** de confidentialité à partir des données communiquées par ces modules.

Plus précisément, le générateur **11** reçoit en entrée :

- de l'analyseur **5** contextuel, le résultat d'analyse contextuelle ;
- de l'analyseur **7** de préférences, le package de préférences ;
- du calculateur **9** de similarité, le résultat de similarité, contenant les matrices de similarité et leurs politiques historiques associées ;
- du vérificateur **10** de polices extérieures, les éventuelles polices **13** de confidentialité extérieures (ou les éventuels aspects légaux) applicables.

Le générateur **11** effectue sur ces données un traitement comprenant un processus de raisonnement logique basé sur ses règles internes préétablies. A titre d'exemple, ce raisonnement peut mettre en oeuvre un moteur d'inférence sémantique, ou tout autre moteur programmé en, utilisant des techniques de logique (ou d'intelligence) artificielle, par exemple la logique de premier ordre (First Order Logic ou FOL) ou encore la logique floue (Fuzzy Logic).

Un tel raisonnement logique est appliqué par le générateur 11 pour effectuer une combinaison des préférences utilisateur (concernant, comme nous l'avons vu, les règles de confidentialité) avec les politiques de confidentialité historiques $P_{ij}$, en tenant compte du contexte de divulgation et des politiques de confidentialité extérieures 13.

Pour éviter d'éventuels conflits ou incompatibilités entre les entrées du générateur **11**, celui-ci peut être programmé pour donner la priorité, lors de la génération d'une politique **4** de confidentialité, aux préférences utilisateur et aux politiques **13** de confidentialité extérieures, paramètres auxquels doivent être subordonnés, en cas de conflit ou d'incompatibilité, les résultats d'analyse contextuelle et de similarité.

De même, le générateur est de préférence programmé pour donner la priorité aux entrées de la matrice de similarité combinée $Tab_{ContentContext}$ sur celles des matrices de similarité $Tab_{Context}$ et $Tab_{Content}$.

En sortie, le générateur **11** produit une (ou plusieurs) politique(s) **4** de confidentialité comprenant un groupe d'autorisations et d'obligations qui doivent être appliquées par les tiers (personnes ou entités réseau) destinataires des données privées circulantes **3**.

Le négociateur **12** de politiques, qui peut être optionnel, vise à permettre la résolution par l'utilisateur **2** d'éventuels conflits non résolus par le générateur **11** de politiques.

Les conflits sont par exemple des autorisations ou des obligations contradictoires résultant de la combinaison d'autorisations d'obligations de nombreux paramètres (notamment les préférences utilisateur, politiques extérieures de confidentialité, etc.).

Le négociateur **12** est un module logiciel programmé pour communiquer avec l'utilisateur **2** aux fins de valider les politiques **4** de confidentialité produites par le générateur **11**, et éventuellement pour lui demander des informations supplémentaires permettant de résoudre d'éventuels conflits résiduels. Les informations fournies par l'utilisateur **2** sont prises en compte par le négociateur **12**, qui génère une ultime version de la (des) politique(s) **4** de confidentialité, dont une copie est sauvegardée au sein de l'historique **8**, aux fins d'une utilisation future en tant que politique historique.

Il résulte de ce qui précède qu'il est rendu possible de générer, en toute simplicité du point de vue de l'utilisateur, des politiques de confidentialité appropriées, en fonction de paramètres pertinents (profil utilisateur, contexte de divulgation, politiques de confidentialité externes) relatives à ses données privées circulantes, et ce quel que soit son niveau de connaissances quant aux politiques de confidentialité.

La solution proposée limite les risques d'utilisation frauduleuse ou de fuite des données privées du fait d'un tiers, car les politiques de confidentialité générées (qui doivent être appliquées par le système tiers recevant les données privées) ne sont ni statiques ni définitives, mais générées de manière dynamique pour une meilleure adaptation au contexte dans lequel les données privées doivent circuler.

## Revendications

1. Procédé de protection de données privées destinées à être divulguées par un utilisateur (**2**) à un tiers interconnectés par un réseau, **caractérisé en ce qu'**il comprend les opérations suivantes :

   - Analyser le contexte de la divulgation ;
   - Déterminer des préférences utilisateur concernées par le contexte de la divulgation ;
   - Générer une politique (**4**) de confidentialité à appliquer à la divulgation, en fonction du contexte et des préférences utilisateur.

2. Procédé selon la revendication 1, **caractérisé en ce qu'**il comprend en outre une opération de calcul d'une similarité entre les données (**3**) privées à divulguer et des données historiques mémorisées, et **en ce que** cette similarité est prise en compte pour générer la politique (**4**) de confidentialité relative aux données (**3**) privées à divulguer.

3. Procédé selon la revendication 2, **caractérisé en ce qu'**il comprend une opération de calcul d'une similarité entre le contexte de la divulgation et des contextes historiques mémorisés correspondant aux données historiques mémorisées, et **en ce que** cette similarité est prise en compte pour générer la politique (**4**) de confidentialité relative aux données privées à divulguer.

4. Procédé selon la revendication 2 ou 3, **caractérisé en ce que** le calcul de similarité comprend une opération d'identification de politiques historiques mémorisées appliquées pour la divulgation desdites données historiques, et **en ce que** ces politiques historiques sont prises en compte pour générer la politique de confidentialité relative aux données privées à divulguer.

5. Procédé selon l'une des revendications 1 à 3, **caractérisé en ce qu'**il comprend une opération d'identification de politiques (**13**) extérieures de confidentialité de tiers visés par la divulgation, et **en ce que** ces politiques (**13**) extérieures de confidentialité sont prises en compte pour générer la politique (**4**) de confidentialité relative aux données (**3**) privées à divulguer.

6. Procédé selon l'une des revendications 1 à 5, **caractérisé en ce qu'**il comprend une opération supplémentaire de prise en compte d'informations fournies par l'utilisateur (**2**) pour résoudre des conflits au sein de la politique (**4**) de confidentialité générée.

7. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 6.

8. Système (**1**) de protection de données (**3**) privées destinées à être divulguées par un utilisateur (**2**) à un tiers, **caractérisé en ce qu'**il comprend :

   - Un module (**5**) d'analyse du contexte de la divulgation ;
   - Un module (**7**) d'analyse de préférences utilisateur concernées par le contexte de la divulgation ;
   - Un générateur (**11**) de politique de confidentialité à appliquer à la divulgation, en fonction du contexte et des préférences utilisateur.

9. Système (**1**) selon la revendication 8, **caractérisé en ce qu'**il comprend en outre :

   - une base de données (**8**) dans laquelle sont mémorisées des données privées historiques,

- un module (**9**) de calcul d'une similarité entre les données (**3**) privées à divulguer et lesdites données historiques mémorisées,

et **en ce que** le générateur (**11**) est programmé pour produire une politique (**4**) de confidentialité tenant compte de ladite similarité.

10. Système (**1**) selon la revendication 9, **caractérisé en ce que** ladite base de données (**8**) historique contient en outre des contextes historiques correspondant aux données historiques mémorisées, **en ce que** le module (**9**) de calcul est programmé pour calculer une similarité entre le contexte de la divulgation et des contextes historiques mémorisés correspondant aux données historiques mémorisées, et **en ce que** le générateur (**11**) est programmé pour tenir compte de cette similarité lors de la production de la politique (**4**) de confidentialité.

11. Système (**1**) selon l'une des revendications 8 à 10, **caractérisé en ce qu'**il comprend un module (**10**) de vérification de politiques extérieures de confidentialité de tiers visés par la divulgation, et **en ce que** le générateur (**11**) est programmé pour tenir compte desdites politiques extérieures de confidentialité lors de la production de ladite politique (**4**) de confidentialité.

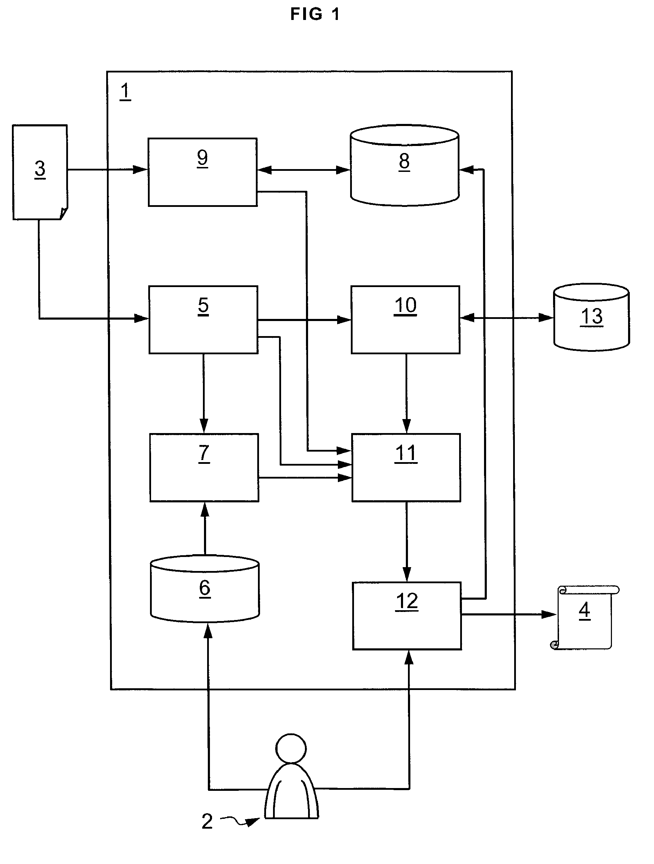

**FIG 1**

Europäisches
Patentamt

European
Patent Office

Office européen
des brevets

**RAPPORT DE RECHERCHE EUROPEENNE**

Numéro de la demande

EP 12 15 0678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 675 047 A1 (IBM [US]) 28 juin 2006 (2006-06-28) * abrégé * * alinéas [0006] - [0027]; figure 3 * ----- | 7 | INV. G06Q30/02 |
| X | US 2010/076777 A1 (PARETTI CHRISTOPHER [US] ET AL) 25 mars 2010 (2010-03-25) * abrégé * * alinéas [0010] - [0018] * ----- | 7 | |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| Munich | 5 mars 2012 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 15 0678

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-03-2012

| Document brevet cité au rapport de recherche | | Date de publication | Membre(s) de la famille de brevet(s) | | Date de publication |
|---|---|---|---|---|---|
| EP 1675047 | A1 | 28-06-2006 | EP | 1675047 A1 | 28-06-2006 |
| | | | US | 2006184995 A1 | 17-08-2006 |
| | | | US | 2008294480 A1 | 27-11-2008 |
| US 2010076777 | A1 | 25-03-2010 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100076777 A

- US 20080294480 A

**Littérature non-brevet citée dans la description**

- **WALID BAGGA.** Cryptographie à Base de Politiques: Théorie et Applications. *Thèse de L'Ecole Nationale Supérieure des Télécommunications,* 2006

- **QIANG TANG.** On Using Encryption Techniques to Enhance Sticky Policies Enforcement. *DIES Faculty of EEMCS,* 2008